# EUROPÄISCHE PATENTSCHRIFT

(11) **EP 0 674 964 B1**
(45) Veröffentlichungstag und Bekanntmachung des Hinweises auf die Patenterteilung: **27.08.1997**
(21) Anmeldenummer: 94116864.3
(22) Anmeldetag: 26.10.1994
(51) Int. Cl.: B23K 26/00, F16L 11/16

(54) **Verfahren zur Herstellung eines Anschlussendes für Wickelschläuche**
Method for manufacturing a connection end section for wrapped hoses
Procédé pour fabriquer une extrémité de connexion pour tuyaux enroulés

(30) Priorität: 31.03.1994 DE 4411246
(43) Veröffentlichungstag der Anmeldung: 04.10.1995
(73) Patentinhaber: Witzenmann GmbH Metallschlauch-Fabrik Pforzheim, D-75175 Pforzheim (DE)
(72) Erfinder: Bantscheff, Richard, D-75233 Tiefenbronn (DE)
(74) Vertreter: Lemcke, Rupert, Dipl.-Ing.

(56) Entgegenhaltungen:
- DE-A- 2 414 263
- DE-A- 2 645 946
- DE-A- 3 000 419
- US-A- 4 905 310
- PATENT ABSTRACTS OF JAPAN vol. 6, no. 60 (E-102) 17. April 1982 & JP-A-57 000 051 (MATSUSHITA ELECTRIC WORKS) 5. Januar 1982

## Beschreibung

Die Erfindung betrifft ein Verfahren zur Herstellung eines Anschlußendes eines Metallschlauches, der von einem durch schraubengangförmiges Wickeln eines Metallbandes bei gegenseitiger formschlüssiger Verbindung benachbarter Bandkanten hergestellten Metallschlauch größerer Länge abgetrennt wird, mit am Ende oder im Bereich des Endes entlang zumindest einem Teil seines Umfanges angeordneter Fixierung von sich radial überlappenden Bandlagen (siehe z.B. DE-A-2645946).

Bei derartigen Wickelschläuchen kann die formschlüssige Verbindung beispielsweise durch gemeinsames Verfalzen benachbarter Bandkanten oder durch ineinandergreifende U-förmig profilierte Bänder gebildet werden, wobei mehr- oder einlagige Bänder mit gegebenenfalls unterschiedlichen Materialien in Frage kommen. Außerdem ist es möglich, die Bänder mit im Falz angeordneten Bandeinlagen zu versehen. Neben kreisförmigen Schlauchquerschnitten können in Abhängigkeit von den jeweiligen Anforderungen auch ovale oder mehrkantige Schläuche Anwendung finden. Nachfolgend wird der Gegenstand der vorliegenden Erfindung im Hinblick auf die bevorzugte Anwendungsform für Schläuche aus miteinander verfalzten Bandkanten beschrieben, ohne daß hierdurch eine Einschränkung gegeben sein soll.

Bei Wickelschläuchen können die Enden zur Verbindung mit Anschlußteilen und dergleichen nicht einfach dadurch hergestellt werden, daß der Wickelschlauch senkrecht zu seiner Achse abgeschnitten wird. Durch einen solchen Schnitt würde die Falzung, durch die die benachbarten Bandlagen aneinander fixiert sind, ebenfalls durchtrennt und diese Fixierung zumindest teilweise aufgehoben, wodurch das an der Schnittebene aufgrund der schrägen Wicklung spitz auslaufende Bandende durch seine Eigenspannung vom Schlauchumfang weg aufspringen würde.

Da ein Weiterverarbeiten des Wickelschlauches mit aufgesprungenem Bandende jedoch nicht mehr möglich wäre, werden noch vor dem Durchtrennen die sich im Bereich der Schnittebene und somit dem späteren Anschlußende überlappenden Bandlagen aneinander fixiert, was beispielsweise durch gegenseitigen Formschluß mittels Anbringen von Eindrückungen, Prägungen usw. erfolgen kann. Hierauf wird der Wickelschlauch entlang der Schnittebene mit Hilfe einer Bandsäge durchtrennt, ohne daß das hierbei gebildete Bandende aufspringt.

Nachteilig hierbei ist aber zum einen, daß eine demgemäß hergestellte Fixierung besonderer aufwendiger Werkzeuge bedarf, wodurch sich schon die Vorbereitung des Abtrennvorganges kompliziert gestaltet.

Zum anderen führt aber auch das Durchtrennen durch die Bandsäge zu einem Mehraufwand, da die Schnittkanten entgratet werden müssen, wodurch wiederum der Wickelschlauch verdrillt wird und somit wieder in die spannungsneutrale Lage ausgerichtet werden muß. Schließlich müssen die beim Sägen sowie beim Entgraten anfallenden Späne entfernt werden, so daß ein nachträgliches Reinigen erforderlich ist.

Ein weiterer Nachteil liegt außerdem darin, daß harte bzw. nur schlecht zerspanbare Materialien des Wickelschlauches - wenn sie überhaupt mit Hilfe der Bandsäge durchtrennt werden können - eine starke Reduzierung der Sägeblatt-Standzeit verursachen, wodurch das Herstellungsverfahren der Wickelschlauchanschlußenden noch einmal aufwendiger und komplizierter gestaltet wird.

Hiervon ausgehend liegt der vorliegenden Erfindung die Aufgabe zugrunde, ein stark vereinfachtes Verfahren zur Herstellung von Anschlußenden für gewickelte Metallschläuche zur Verfügung zu stellen.

Diese Aufgabe wird erfindungsgemäß dadurch gelöst, daß im Bereich der Schnittstelle über den gesamten Umfang des Metallschlauches eine große Zahl von Schweißstellen in Form einer Steppnaht durch Strahlschweißen hergestellt werden und dann die Abtrennung durch Laserstrahlschneiden durchgeführt wird.

Eine demgemäße stoffschlüssige Verbindung hat den Vorteil, daß die Ebene der Fixierstellen möglichst nahe an die Schnittebene herangelegt werden kann, mit dieser sogar deckungsgleich sein kann, wodurch auch das äußerste Bandende noch sicher fixiert wird. Im Gegensatz dazu besteht bei formschlüssiger Verbindung immer die Gefahr, daß die Verbindungsstellen bei möglichst naher Anordnung an der Schnittebene teilweise durchtrennt werden und der Verbund bei leichter Axialbeanspruchung des Wickelschlauches aufgehoben wird.

Durch das erfindungsgemäße Verwenden einer Strahlschweißeinrichtung wird darüber hinaus der Querschnitt der Schweißstellen auf ein Mindestmaß von ungefähr einem halben Millimeter reduziert, ohne eine Einbuße in der Qualität der Fixierung benachbarter Bandlagen zu erhalten. Diese Herabsetzung des Schweißstellendurchmessers beseitigt den Nachteil einer großflächigen thermischen Verformung, die bei Anwendung herkömmlicher Punktschweißung auftreten würde und die zu Versprödungen sowie beim Weiterverarbeiten des Anschlußendes zu Rißbildungen führen könnte. Demgegenüber können bei Strahl-Schweißverfahren aufgrund der starken Schweißstrahl-Fokussierung auch mehrere Lagen miteinander verschweißt werden, ohne daß sich der wirksame Schweißstrahldurchmesser entsprechend vergrößert. Somit wird auch der Bereich, der kurzzeitig auf die Schweißtemperatur aufgeheizt wird, so klein gehalten, daß sich die Materialeigenschaften am Schlauchende nur unwesentlich bzw. in relativ zum Schlauchumfang vernachlässigbaren Querschnittsflächen ändern, wodurch ein Weiterverarbeiten des Schlauchendes, also zum Beispiel ein Aufweiten zur Verbindung mit Anschlußteilen - das bei herkömmlichen Schweißpunkten zu Rißbildungen und zur Zerstörung der gegenseitigen Fixierung der Bandlagen führen würde - ohne Auswirkungen auf die Schweißpunktfixierung bleibt.

Erfindungsgemäß sind die Schweißstellen, die in Form einer Laser-Steppnaht durchgehend, unterbrochen, punktförmig, in Form von kurzen Linienstücken oder ähnlichen Anordnungen aufgebaut sein können, entlang des gesamten Schlauchumfanges verteilt, wobei sie sich allerdings auch über Bereiche erstrecken, in denen der Schlauch entweder einlagig ist und somit keine Fixierung radial benachbarter Bandlagen erfolgen kann oder aber auch bei denen ein Aufspringen des spitz zulaufenden Bandendes aufgrund der fixierenden Falzung sehr unwahrscheinlich ist. Hierdurch ist aber sichergestellt, daß das Band auf jeden Fall im Bereich des spitz zulaufenden Endes, dem kritischen Bereich des Anschlußendes, fixiert ist und nicht aufspringen kann.

Darüber hinaus besteht der Vorteil beim erfindungsgemäßen Verfahren darin, daß aufgrund der Abtrennung durch Laserstrahlschneiden mehrlagige Wickelschläuche mit selbst unterschiedlichsten Materialkombinationen und schwer zerspanbaren Bandeinlagen durchtrennt werden können, ohne daß ein Nacharbeiten in Form von Entgraten, erneutem Ausrichten des Wickelschlauches oder auch Reinigen erforderlich wäre. Selbst harte Materialien, die beim Stand der Technik eine drastische Reduzierung der Sägeblatt-Standzeit verursacht haben, beeinflussen nun die Schnittzeit nur unwesentlich und führen zusätzlich, aufgrund des berührungslosen Strahlschnitts, auch zu keinem erhöhten Verschleiß des Schnittwerkzeugs, so daß ein fast wartungsfreies Bearbeiten möglich wird.

All diese Vorteile führen zu einer drastischen Reduzierung der Bearbeitungszeit und einer entsprechenden Kosteneinsparung verbunden mit einer deutlichen Qualitäts- und Genauigkeitsverbesserung bei der Herstellung des erfindungsgemäßen Anschlußendes. Aus diesen Vorteilen ergibt sich außerdem die Möglichkeit, das Anschlußende automatisiert zu fertigen, wodurch Genauigkeit und Qualität noch einmal verbessert werden. Es lassen sich die Vorteile der Erfindung bei allen Arten von Wickelschläuchen und insbesondere bei Agraffschläuchen erzielen unabhängig davon, ob sie ein- oder mehrlagig oder unter Einfügen von Bandeinlagen gewickelt sind.

Zweckmäßigerweise sind die Schweißstellen - und somit auch die Schnittebene - entlang des Schlauchumfanges in einer zur Schlauchachse senkrechten Ebene verteilt angeordnet, da fast alle Anschlußteile auf ein senkrecht zur Schlauchachse befindliches Anschlußende ausgelegt sind. Es liegt ebenfalls im Rahmen der Erfindung, zur Schlauchachse geneigte Schnittflächen zu erzeugen, also die Schweißstellen relativ zur Schlauchsenkrechten im Winkel anzuordnen, wodurch noch weitere Vorteile des berührungslosen Durchtrennens aufgrund fehlender Verzerrungen und Verdrillungen zum Tragen kommen.

Besonders vorteilhaft ist es, wenn die Schweißstellen durch eine Laserschweißeinrichtung gebildet sind, da sich die optimalen Fokussiereigenschaften von Laserstrahlen direkt auf die Qualität und den Querschnitt der Schweißstellen direkt auswirken. Es ist aber auch denkbar, anstatt der Laserschweißeinrichtung eine Elektronenstrahl- oder andere entsprechende Schweißeinrichtungen zu verwenden, sofern sie ähnliche Eigenschaften wie das Schweißen durch Laser aufweisen.

Für die Anordnung der Schweißstellen sind verschiedene Varianten möglich, indem der Wickelschlauch vor dem Durchtrennen im Bereich der Schnittebene beispielsweise mit zwei zueinander parallelen Reihen von Schweißstellen auf beiden Seiten der Schnittebene versehen ist und die Abtrennung zwischen diesen beiden Reihen erfolgt, wodurch mit einem Schnitt zwei Anschlußenden herstellbar sind. Der gleiche Effekt läßt sich aber auch dadurch erzielen, daß die Schweißstellen bei einem Ausführungsbeispiel einen Schweißpunktdurchmesser von ca. 1 mm (im Vergleich zu einem Durchmesser von jeweils 0,5 mm bei den zwei parallelen Reihen von Schweißstellen) aufweist und die Abtrennung mit nur einer Schnittbreite von weniger als 0,15 mm durch die Schweißstellenmitte erfolgt, so daß beide durch den Schnitt gebildeten Anschlußenden des Wickelschlauches eine ausreichende Fixierung durch die verbliebenen halben Schweißstellen aufweisen.

Wird der Wickelschlauch mit einer Doppelsteppnaht versehen, sollte der Abstand zwischen den beiden Steppnähten nur sehr gering - beispielsweise weniger als 0,5 mm - sein, da ansonsten eine sichere Fixierung des spitz zulaufenden Bandendes nicht mehr gewährleistet ist. Je nach Wicklungswinkel des Schlauches beträgt beispielsweise die Länge des freien Bandendes bis zur ersten Schweißstellenfixierung ca. 3 cm, wenn die Steppnaht nur 1 mm von der Schnittebene entfernt angeordnet ist.

Besonders vorteilhaft ist es, wenn sowohl die Schweißstellen als auch der Laserschnitt durch ein und dieselbe Laserschweißeinrichtung gebildet sind, wodurch sich noch einmal Zeit und Kosten bei der Bearbeitung einsparen bzw. die Genauigkeit verbessern lassen. Natürlich muß der Laserstrahl an den jeweiligen Arbeitsvorgang, also entweder an das Schweißen oder das Schneiden angepaßt sein, so daß die Schweißeinrichtung entsprechend einstellbar bzw. steuerbar sein muß.

Weitere Merkmale und Vorteile der vorliegenden Erfindung ergeben sich aus der nachfolgenden Beschreibung eines Ausführungsbeispiels anhand der Zeichnung; hierbei zeigen
- Figur 1: einen Wickelschlauch vor dem Durchtrennen in teilweise aufgebrochener Seitenansicht;
- Figur 2: den Wickelschlauch mit einem Anschlußende nach dem Durchtrennen in ebenfalls teilweise aufgebrochener Seitenansicht; und
- Figur 2a: einen kritischen Bereich des Wickelschlauches aus Figur 2 in vergrößerter Darstellung.

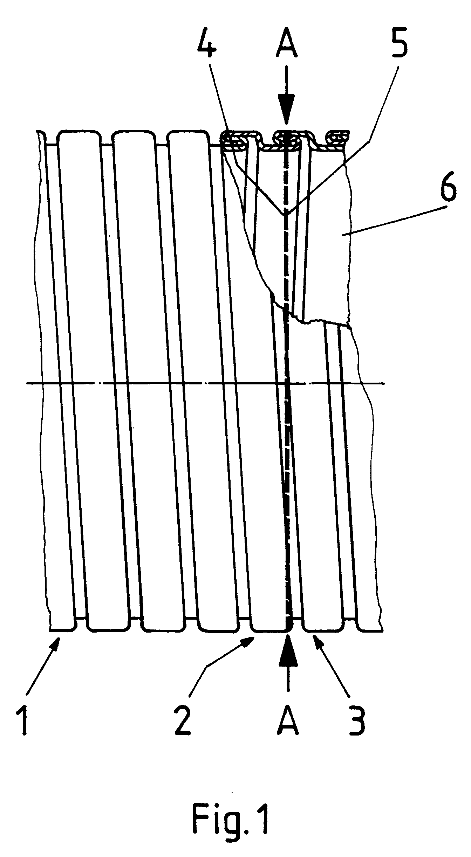

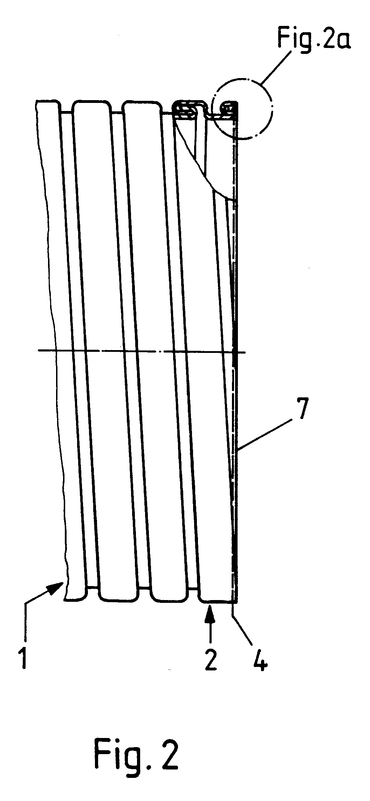

In Figur 1 ist ein Wickelschlauch in Form eines Agraffschlauches vor dem Durchtrennen und Herstellen von Anschlußenden 2 und 3 in teilweise aufgebrochener Seitenansicht dargestellt. Die beiden späteren Anschlußenden 2 und 3 sind beiderseits einer durch die Pfeile A-A angedeuteten Schnittebene angeordnet. Die Schnittebene verläuft senkrecht zur Schlauchachse und genau zwischen zwei Lasersteppnähten 4 und 5, die jeweils dem späteren Anschlußende 2 bzw. 3 zugeordnet sind und zur gegenseitigen Fixierung von sich radial überlappenden Lagen eines Metallbandes 6 dienen, aus dem der Wickelschlauch hergestellt ist.

Durch die Laser-Doppelsteppnaht, die sich bei dem abgebildeten Ausführungsbeispiel entlang des gesamten Schlauchumfanges in zwei Gruppen 4 und 5 von kurzen voneinander beabstandeten Teilnähten erstreckt, sind die Falzlagen des Metallbandes 6 so miteinander verschweißt, daß der Falzverbund auch nach dem Durchtrennen entlang der Schnittebene A-A aufrechterhalten bleibt und das aufgrund der schraubengangförmigen Wicklung jeweils beiderseits der Schnittebene spitz zulaufende Ende nicht aufspringt.

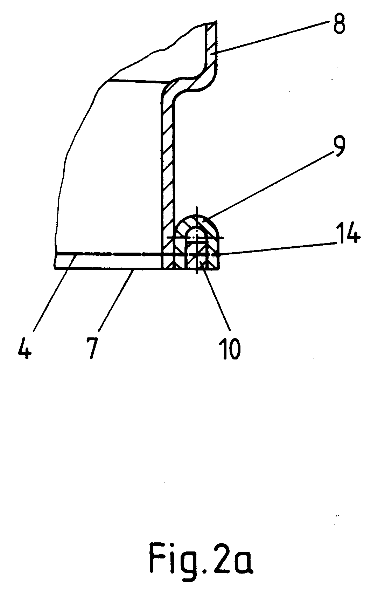

Nach dem Anbringen der Steppnähte 4 und 5 mit Hilfe einer Laserschweißeinrichtung wird dieselbe Schweißeinrichtung dazu verwendet, den Metall schlauch 1 entlang der Schnittebene A-A zwischen den Steppnähten 4 und 5 zu durchtrennen. Hierdurch entstehen zwei Anschlußenden 2 und 3 für Anschlußteile und dergleichen, wobei das Anschlußende 2 in Figur 2 dargestellt ist. Dort ist eine Schnittkante 7 zu erkennen, die sich in der Schnittebene A-A aus Figur 1 erstreckt und ebenso wie die dem Anschlußende 2 zugeordnete Steppnaht 4 senkrecht zur Schlauchachse positioniert ist.

Der für Anschlußenden von Wickelschläuchen kritische Bereich ist in Figur 2a vergrößert dargestellt. Dort ist eine Falzung bestehend aus einer Bandinnenlage 8, einer von außen nach innen gefalzten Außenlage 9 und einem ursprünglich der Innenlage 8 zugehörigen, zwischen der Außenlage 9 eingeklemmten Bandende 10 zu erkennen. Sowohl Innenlage 8, als auch Außenlage 9 und Bandende 10 sind durch einen einzelnen geschnitten dargestellten Schweißpunkt 14 der Laser-Steppnaht 4 miteinander verbunden.

Würde diese Fixierung fehlen, so würden sich aufgrund der elastischen Eigenspannungen sowohl die Außenlage 9 von der Innenlage 8 als auch das Bandende 10 aus der Klemmung zwischen der Außenlage 9 heraus abheben und aufspringen. In Figur 2a ist ebenfalls zu erkennen, daß der Abstand zwischen der Steppnaht 4 und der Schnittkante 7 möglichst klein gehalten werden muß, um einen nicht fixierten Bereich des Metallbandes zu vermeiden.

Das Lasertrennen, das entweder mit der gleichen Laserschweißeinrichtung wie das Punktschweißen oder aber auch mit einer separaten Einrichtung erfolgen kann, erfolgt unter Hochdruck, so daß die beim Schweißen unter Umständen entstehenden Schlauchpartikel durch das Schutzgas sofort entfernt werden. Bei Verwendung von zwei Laserschweißeinrichtungen ist es beispielsweise möglich, daß beide um 90° zueinander versetzt arbeiten, also das Verschweißen dem Durchtrennen um 90° vorauseilt, wodurch die Taktzeit pro Herstellungsabschnitt zweier Anschlußenden noch einmal reduziert wird.

Aufgrund des erfindungsgemäßen Verwendens der Laserschweißeinrichtung zum Durchtrennen des Wickelschlauches ist es nun möglich, alle gehärteten und ungehärteten Stähle, Edelstähle und auch Nichteisenmetalle in den unterschiedlichsten Materialpaarungen gratfrei und unter Einhaltungen kleinster Toleranzen zu trennen.

## Patentansprüche

1. Verfahren zur Herstellung eines Anschlußendes (2,3) eines Metallschlauches, der von einem durch schraubengangförmiges Wickeln eines Metallbandes (6) bei gegenseitiger formschlüssiger Verbindung benachbarter Bandkanten hergestellten Metallschlauch größerer Länge abgetrennt wird, mit am Ende oder im Bereich des Endes entlang zumindest einem Teil seines Umfanges angeordneter Fixierung von sich radial überlappenden Bandlagen (8,9),
dadurch gekennzeichnet,
daß im Bereich der Schnittstelle (7) über den gesamten Umfang des Metallschlauches (1) eine große Zahl von Schweißstellen (4,5,14) in Form einer Steppnaht durch Strahlschweißen hergestellt werden und dann die Abtrennung durch Laserstrahlschneiden durchgeführt wird.

2. Verfahren nach Anspruch 1,
dadurch gekennzeichnet,
daß die Schweißstellen (4,5,14) entlang des Schlauchumfanges in einer zur Schlauchachse senkrechten Ebene verteilt angeordnet werden.

3. Verfahren nach Anspruch 1,
dadurch gekennzeichnet,
daß die Schweißstellen (4,5,14) entlang des Schlauchumfanges in einer zur Schlauchachse geneigten Ebene verteilt angeordnet werden.

4. Verfahren nach Anspruch 1,
dadurch gekennzeichnet,
daß die Schweißstellen (4,5,14) durch eine Laserschweißeinrichtung gebildet werden.

5. Verfahren nach Anspruch 1,
dadurch gekennzeichnet,
daß sowohl die Schweißstellen (4,5,14) als auch die Abtrennung durch ein und dieselbe Laserschweißeinrichtung gebildet werden.

6. Verfahren nach Anspruch 1,
dadurch gekennzeichnet,
daß die Schweißstellen (4,5,14) in zwei zueinander parallelen Reihen nebeneinander angeordnet werden und daß die Abtrennung in einer Ebene zwischen den beiden Reihen erfolgt.

7. Verfahren nach Anspruch 1,
dadurch gekennzeichnet,
daß der Laserschnitt (7) in der Ebene der Schweißstellen (4,5,14) liegt.

## Claims

1. Method of producing a connection end on a metal hose which is severed from a metal hose of greater length formed by the helical winding of a metal strip (6) with mutual positively locking connection of adjacent strip edges, having at the end or in the region of the end and arranged around at least a portion of its circumference means for fixing radially overlapping strip layers (8, 9)
characterised in that
in the region of the cutting point (7) a large number of welds (4, 5, 14) are made by beam welding over the entire circumference of the metal hose (1) to form a closing seam and then the severing is performed by means of laser beam cutting.

2. Method according to claim 1,
characterised in that
the welds (4, 5, 14) are arranged distributed around the circumference of the hose in a plane perpendicular to the axis of the hose.

3. Method according to claim 1,
characterised in that
the welds (4, 5, 14) are arranged distributed around the circumference of the hose in a plane inclined with respect to the axis of the hose.

4. Method according to claim 1,
characterised in that
the welds (4, 5, 14) are made by a laser welding device.

5. Method according to claim 1,
characterised in that
both the welds (4, 5, 14) and the severing are performed by the same laser welding device.

6. Method according to claim 1,
characterised in that
the welds (4, 5, 14) are arranged one next to the other in two rows parallel to one another and the severing is effected in a plane between the two rows.

7. Method according to claim 1,
characterised in that
the laser cut (7) lies in the plane of the welds (4, 5, 14).

## Revendications

1. Procédé de fabrication d'une extrémité de raccord (2, 3) d'un tuyau métallique, qui est séparé d'un tuyau métallique de longueur supérieure fabriqué par enroulement en spirale d'une bande de métal (6) par raccordement à engagements positifs réciproques de bords de bandes contigus, avec, le long de l'extrémité ou le long de la zone d'extrémité, une fixation de couches de bandes (8, 9) se chevauchant sur un plan radial disposée sur au moins une partie de sa circonférence, caractérisé en ce que, dans la zone de la coupure (7), sur l'ensemble de la circonférence du tuyau métallique (1), un grand nombre de soudures (4, 5, 14), présentées sous forme d'une ligne continue par points, sont réalisées par soudage par rayonnement, et en ce que la séparation est ensuite réalisée par découpage aux rayons laser.

2. Procédé selon la revendication 1, caractérisé en ce que les soudures (4, 5, 14) sont réparties le long de la circonférence du tuyau selon un plan perpendiculaire à l'axe du tuyau.

3. Procédé selon la revendication 1, caractérisé en ce que les soudures (4, 5, 14) réparties le long de la circonférence du tuyau sont disposées selon un plan incliné par rapport à l'axe du tuyau.

4. Procédé selon la revendication 1, caractérisé en ce que les soudures (4, 5, 14) sont réalisées au moyen d'un dispositif de soudage au laser.

5. Procédé selon la revendication 1, caractérisé en ce qu'à la fois les soudures (4, 5, 14) et la séparation sont réalisées au moyen d'un même dispositif de soudage au laser.

6. Procédé selon la revendication 1, caractérisé en ce que les soudures (4, 5, 14) sont disposées les unes à côté des autres sur deux rangs parallèles, et en ce que la séparation est réalisée selon un plan se trouvant entre les deux rangs.

7. Procédé selon la revendication 1, caractérisé en ce que la coupure du laser (7) se situe dans le plan des soudures (4, 5, 14).
